(19) **Europäisches Patentamt / European Patent Office / Office européen des brevets**

(11) **EP 4 641 652 A1**

(12) **EUROPEAN PATENT APPLICATION**
published in accordance with Art. 153(4) EPC

(43) Date of publication:
**29.10.2025 Bulletin 2025/44**

(21) Application number: **23907901.5**

(22) Date of filing: **22.12.2023**

(51) International Patent Classification (IPC):
$H01M\ 4/13^{(2010.01)}$    $H01M\ 4/36^{(2006.01)}$
$H01M\ 4/62^{(2006.01)}$    $H01M\ 4/583^{(2010.01)}$
$H01M\ 4/04^{(2006.01)}$    $H01M\ 4/66^{(2006.01)}$
$H01M\ 4/139^{(2010.01)}$    $H01M\ 10/052^{(2010.01)}$
$H01M\ 4/02^{(2006.01)}$

(52) Cooperative Patent Classification (CPC):
**H01M 4/02; H01M 4/04; H01M 4/13; H01M 4/139;
H01M 4/36; H01M 4/583; H01M 4/62; H01M 4/66;
H01M 10/052; Y02E 60/10**

(86) International application number:
**PCT/KR2023/021512**

(87) International publication number:
**WO 2024/136618 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 KR 20220182359**

(71) Applicant: **LG Energy Solution, Ltd.
Seoul 07335 (KR)**

(72) Inventors:
- **YANG, Jeong-Min
  Daejeon 34122 (KR)**
- **LIM, Chang-Yoon
  Daejeon 34122 (KR)**
- **KIM, Hak-Yoon
  Daejeon 34122 (KR)**
- **PARK, Moon-Soo
  Daejeon 34122 (KR)**

(74) Representative: **Plasseraud IP
104 Rue de Richelieu
CS92104
75080 Paris Cedex 02 (FR)**

(54) **ANODE FOR ELECTROCHEMICAL DEVICE**

(57) Disclosed is a negative electrode for an electrochemical device. The negative electrode is obtained through a dry process by using composite particles including binder particles satisfying a predetermined particle diameter range, and thus shows a uniform distribution of binder polymer in the negative electrode active material layer. Therefore, the negative electrode shows high binding force of the negative electrode ingredients and provides the negative electrode active material layer with excellent durability and shape stability. **In** addition, a high level of adhesion force is realized between the negative electrode active material layer and the current collector.

**EP 4 641 652 A1**

FIG. 1

**Description**

TECHNICAL FIELD

The present application claims priority to Korean Patent Application No. 10-2022-0182359 filed on December 22, 2022 in the Republic of Korea.

The present disclosure relates to a negative electrode for an electrochemical device, including composite particles for a dry electrode.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry. Currently, typical examples of electrochemical devices using electrochemical energy include secondary batteries, and application thereof has been extended gradually. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution. In addition, application of such a lithium secondary battery has been extended even to a supplementary power source of electric power through the formation into a grid.

A process of manufacturing such a lithium secondary battery is broadly divided into the three steps of an electrode-forming step, an electrode assembly-forming step and an aging step. In general, the electrode-forming step is carried out by preparing an electrode slurry and coating the electrode slurry on an electrode current collector, followed by drying. In addition, the drying step is followed by a pressing step, a slitting step, a winding step, or the like. Among the steps, the electrode slurry-preparing step is a step of mixing the ingredients for forming an electrode active material layer configured to carry out electrochemical reactions actually in the electrode. Particularly, an electrode active material as an essential element of the electrode is mixed with a conductive material and filler as other additives, a binder used for the binding of powder particles among themselves and the adhesion to a current collector, a solvent for imparting viscosity and dispersing powder particles, or the like, to prepare a slurry having flowability.

In such an electrode using a slurry coating process for forming an electrode active material layer according to the related art, the binder material in the electrode cannot be distributed uniformly in the thickness direction of the electrode, but a larger amount of the binder material is distributed intensively on the surface of the electrode active material layer. Therefore, there is a problem in that the binding force between the electrode active material layer and the current collector cannot be ensured sufficiently. This is a phenomenon resulting from the migration of the binder material toward the surface layer, as the solvent of the slurry evaporates during the drying of the slurry.

To solve the above-mentioned problem, there has been suggested a method for manufacturing a dry electrode including compressing electrode ingredients through a dry process using no solvent in preparing an electrode active material layer. However, there is a need for establishing processing conditions suitable for manufacturing a dry electrode so that the dry electrode may realize a desired level of adhesion, besides such a processing mode in which no solvent is introduced simply.

DISCLOSURE

Technical Problem

The present disclosure is designed to solve the problems of the related art, and therefore the present disclosure is directed to providing a negative electrode including a negative electrode active material and a negative electrode binder polymer. The present disclosure is also directed to providing a negative electrode which includes a negative electrode active material layer having a uniform binder distribution and ensures uniform adhesion force in the thickness direction of the negative electrode active material layer. It will be easily understood that these and other objects and advantages of the present disclosure may be realized by the means shown in the appended claims and combinations thereof.

Technical Solution

According to the first embodiment of the present disclosure, there is provided a negative electrode for an electrochemical device, including a current collector and a negative electrode active material layer formed on at least one surface of the current collector,

wherein the negative electrode active material layer includes composite particles for a negative electrode, the composite particles for a negative electrode include a negative electrode active material and a negative electrode binder polymer, and the negative electrode binder polymer includes an adhesive rubber-based polymer, the negative electrode binder polymer has a shape of particles having a predetermined particle diameter, and the particle diameter ($D_{50}$) is equal to or larger than 50 nm and smaller than 300 nm, and the negative electrode active material layer satisfies at least one of the following conditions of A) to C):

$$A) \quad 100.000 \text{ gf/20 mm*MPa} < X_c \times X_a$$

$$B) \quad 0 \text{ MPa} < X_b < 0.280 \text{ MPa}$$

$$C) \quad 0 \text{ Mpa} < X_d - X_u < 0.200 \text{ Mpa},$$

wherein $X_u$ represents the shear force in a region corresponding to a thickness of 5-10% based on 100% of the total thickness of the negative electrode active material layer from the top to the bottom in the thickness direction of the negative electrode active material layer, $X_d$ represents the shear force in a region corresponding to a thickness of 5-10% based on 100% of the total thickness of the negative electrode active material layer from the bottom to the top in the thickness direction of the negative electrode active material layer, $X_a$ represents the average of shear forces at two or more arbitrary points based on the thickness of the negative electrode active material layer, $X_b$ represents the deviation of shear force at two or more arbitrary points based on the thickness of the negative electrode active material layer, and $X_c$ represents adhesion force.

According to the second embodiment of the present disclosure, there is provided the negative electrode for an electrochemical device as defined in the first embodiment, wherein the negative electrode active material layer satisfies all of the conditions of A) to C).

According to the third embodiment of the present disclosure, there is provided the negative electrode for an electrochemical device as defined in the first or the second embodiment, wherein the negative electrode active material layer further satisfies the following condition of D):

$$D) \quad 0.500 \text{ nm}^{-1} < 100/X_t < 1.500 \text{ nm}^{-1},$$

wherein $X_t$ represents the particle diameter ($D_{50}$, unit: nm) of the binder particles.

According to the fourth embodiment of the present disclosure, there is provided the negative electrode for an electrochemical device as defined in any one of the first to the third embodiments, wherein the composite particles for a negative electrode include the negative electrode active material and the negative electrode binder polymer at a weight ratio of 90:10-99.9:0.1.

According to the fifth embodiment of the present disclosure, there is provided the negative electrode for an electrochemical device as defined in any one of the first to the fourth embodiments, wherein each of $X_u$ and $X_d$ independently represents 2.000-4.000 MPa.

According to the sixth embodiment of the present disclosure, there is provided the negative electrode for an electrochemical device as defined in any one of the first to the fifth embodiments, wherein $X_c$ is 15.000-50.000 gf/20 mm.

According to the seventh embodiment of the present disclosure, there is provided the negative electrode for an electrochemical device as defined in any one of the first to the sixth embodiments, wherein the value of each of $X_u$ and $X_d$ is independently reflected to each of $X_a$ and $X_b$.

According to the eighth embodiment of the present disclosure, there is provided the negative electrode for an electrochemical device as defined in any one of the first to the seventh embodiments, wherein the negative electrode active material includes at least one selected from: a carbonaceous material including at least one selected from graphitizable carbon, non-graphitizable carbon, natural graphite and artificial graphite; $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon oxide including at least one of SiO, SiO/C and $SiO_2$; and metal oxide including at least one of SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$.

According to the ninth embodiment of the present disclosure, there is provided the negative electrode for an electrochemical device as defined in any one of the first to the eighth embodiments, wherein the composite particles for a negative electrode have a particle diameter ($D_{50}$) of 40-70 $\mu$m.

According to the tenth embodiment of the present disclosure, there is provided the negative electrode for an electrochemical device as defined in any one of the first to the ninth embodiments, wherein the negative electrode binder polymer includes a diene-based polymer, an acrylate-based polymer, a fluorine-based polymer, a styrene-based polymer, or two or more of them.

According to the eleventh embodiment of the present disclosure, there is provided the negative electrode for an electrochemical device as defined in any one of the first to the tenth embodiments, wherein the composite particles for a negative electrode have an aspect ratio of 0.5-1.0.

According to the twelfth embodiment of the present disclosure, there is provided the negative electrode for an electrochemical device as defined in any one of the first to the eleventh embodiments, wherein the composite particles for a negative electrode further include a negative electrode conductive material, and the negative electrode conductive material is used in an amount of 10 wt% or less based on 100 wt% of the composite particles for a negative electrode.

According to the thirteenth embodiment of the present disclosure, there is provided the negative electrode for an electrochemical device as defined in any one of the first to the twelfth embodiments, wherein the current collector includes a primer layer interposed between the current collector and the negative electrode active material layer, and the primer layer includes a primer layer conductive material and a primer layer binder polymer.

According to the fourteenth embodiment of the present disclosure, there is provided the negative electrode for an electrochemical device as defined in any one of the first to the thirteenth embodiments, wherein the negative electrode active material layer is formed by compressing a plurality of composite particles for a negative electrode.

According to the fifteenth embodiment of the present disclosure, there is provided an electrochemical device including the negative electrode according to the present disclosure.

Advantageous Effects

The negative electrode according to the present disclosure is obtained through a dry process by using composite particles including binder particles satisfying a predetermined particle diameter range, and thus shows a uniform distribution of binder polymer in the negative electrode active material layer. Therefore, the negative electrode shows high binding force of the negative electrode ingredients and provides the negative electrode active material layer with excellent durability and shape stability. In addition, a high level of adhesion force is realized between the negative electrode active material layer and the current collector.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

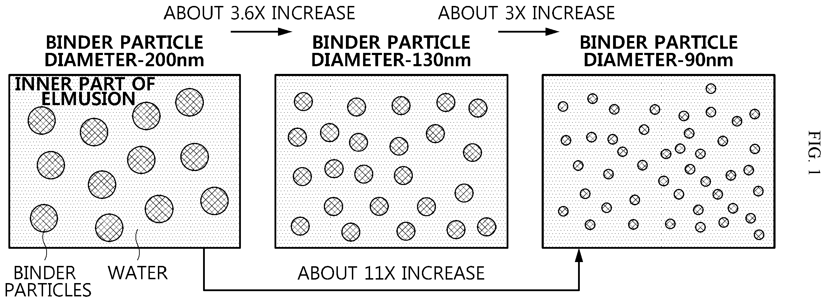

FIG. 1 is a schematic view illustrating the distribution of binder particles in a negative electrode active material layer depending on size of binder particles.

FIG. 2 is a schematic view illustrating an embodiment in which shear strength is determined depending on cutting depth, while cutting an active material layer with a micro-blade by using SAICAS (Surface and Interfacial Cutting Analysis System).

BEST MODE

Hereinafter, preferred embodiments of the present disclosure will be described in detail. However, the scope of the present disclosure is not limited to the following embodiments but each constitutional element may be diversely changed and selectively combined, if necessary. Therefore, it should be understood that other modifications, equivalents and substitutions could be made thereto without departing from the scope of the disclosure.

Throughout the specification, the expression 'a part includes an element' does not preclude the presence of any additional elements but means that the part may further include the other elements, unless otherwise stated.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

The specific terms used in the present disclosure are for convenience and are not limitative. It is apparent to those skilled in the art that the terms showing directions such as 'top', 'bottom', 'left', 'right', 'front', 'rear', 'inside' and 'outside' may be used to describe the relative positions or directions between constitutional element, not absolute locations, or may refer to positions or directions in drawings where reference has been made. In addition to these terms themselves, the terms include words including them, their derivatives, and words of similar meanings.

As used herein, the term 'porosity' means a volume occupied by pores based on the total volume of a structure, is expressed in the unit of vol%, and may be used exchangeably with the terms, such as pore ratio, porous degree, or the like. According to the present disclosure, the method for determining porosity is not particularly limited. According to an embodiment of the present disclosure, the porosity may be determined by the Brunauer-Emmett-Teller (BET) method using nitrogen gas or Hg porosimetry and according to ASTM D-2873. Further, the net density of a separator may be calculated from the density (apparent density) of the separator and the compositional ratio of ingredients contained in the separator and density of each ingredient, and the porosity of the separator may be calculated from the difference between the apparent density and the net density.

As used herein, the term 'average particle diameter ($D_{50}$)' refers to the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

Herein, the 'thickness' of each layer contained in the electrode may be a value measured by any known method for measuring thickness. For example, the thickness may be determined by using a thickness gauge (VL-50S-B, available from Mitutoyo), but is not limited thereto.

As used herein, the term 'specific surface area' may be a value determined by any known method for determining a specific surface area. For example, the specific surface area may be determined by a fluidization method or a fixing method, but is not limited thereto.

The present disclosure relates to a negative electrode for an electrochemical device and a method for manufacturing the same. According to the present disclosure, the electrochemical device includes any device which carries out electrochemical reaction, and particular examples thereof include all types of primary batteries, secondary batteries, fuel cells, solar cells or capacitors, such as super capacitor devices. Preferably, the electrochemical device may be a secondary battery, more preferably a lithium-ion secondary battery.

The negative electrode according to the present disclosure includes a current collector and a negative electrode active material layer formed on at least one surface of the current collector. According to the present disclosure, the negative electrode active material layer may be prepared by compressing the composite particles as described hereinafter in a powdery state. In other words, the negative electrode active material layer according to the present disclosure may be prepared through a dry process, not a wet process in which it is prepared through a fluid-state wet slurry including electrode ingredients, such as an electrode active material, mixed with a solvent.

## <Dry Electrode>

The negative electrode active material layer includes composite particles for a negative electrode, and the composite particles for a negative electrode include a negative electrode active material and a negative electrode binder polymer (first polymer). The composite particles have a shape of particles while the negative electrode active material particles are bound by the negative electrode binder polymer. In other words, in the composite particles, a plurality of negative electrode active material particles and polymer particles are in contact with one another and are fixed and bound by the polymer particles to form a group of aggregates. The term 'dry electrode' refers to an electrode manufactured by using the composite particles for a negative electrode as described hereinafter while excluding the use of a solvent in the manufacturing process.

According to an embodiment of the present disclosure, the composite particles may include the negative electrode active material and the negative electrode binder polymer at a weight ratio of 90:10-99.9:0.1, preferably 90:10-95:5, based on the total weight of the composite particles. Meanwhile, according to an embodiment of the present disclosure, the composite particles may further include a negative electrode conductive material (first conductive material), if necessary. The negative electrode conductive material may be used in an amount of 0.1-20 wt% or less, preferably 0.1-10 wt% or less, based on 100 wt% of the composite particles. For example, the conductive material may be used in an amount of about 0.1-5 wt% in the composite particles.

Meanwhile, according to an embodiment of the present disclosure, the composite particles may have an aspect ratio of 0.5-1.0. The aspect ratio may refer to the ratio of the longer axis length based on the shorter axis length of the composite particles. Herein, the average shorter axis length refers to the average value of lengths in the direction of the axis having the shortest length in the composite particles, and the average longer axis length refers to the average value of lengths in the direction of the axis having the longest length in the composite particles. When the aspect ratio of the composite particles satisfies the above-defined range, there is an advantage in that the composite particles have sufficient flowability suitable for the process.

Meanwhile, according to an embodiment of the present disclosure, the particle diameter ($D_{50}$) of the composite particles may be 70 $\mu$m or less, preferably. Particularly, the average particle diameter of the composite particles may range from 40-70 $\mu$m. The lower limit of the particle diameter may be controlled considering the size of the negative electrode active material particles to be used. According to an embodiment of the present disclosure, when the particle diameter ($D_{50}$) of the negative electrode active material particles falls within a range of 15-20 $\mu$m, the composite particles may have a particle diameter ($D_{50}$) of about 40 $\mu$m or more. Meanwhile, when the particle diameter ($D_{50}$) of the composite particles is excessively large, for example, larger than 70 $\mu$m, the flowability of the electrode powder may be decreased.

According to an embodiment of the present disclosure, the negative electrode active material layer may include the composite particles in an amount of 95 wt% or more based on 100 wt% of the negative electrode active material layer. Meanwhile, the negative electrode active material layer may further include free-state negative electrode active material particles, binder particles and conductive material particles derived from the composite particles.

The negative electrode active material layer is formed by integrating the composite particles in a layered structure, has pores derived from the interstitial volumes which are spaces among the composite particles, and shows porous property resulting from such a structure. According to an embodiment of the present disclosure, the negative electrode active material layer preferably has a porosity of 20-40 vol%, considering the wettability with an electrolyte, shape stability, ion conductivity, or the like.

Meanwhile, according to an embodiment of the present disclosure, the negative electrode active material layer may have a thickness of 10-300 $\mu$m, or 30-300 $\mu$m, but is not limited thereto.

Meanwhile, the negative electrode binder polymer (first polymer) has a shape of particles having a predetermined particle diameter, and the particle diameter ($D_{50}$) is equal to or more than 50 nm and less than 300 nm. For example, the particle diameter ($D_{50}$) may be more than 66 nm and less than 200 nm. When the first polymer has the above-defined range of particle diameter, the first polymer is distributed uniformly in the negative electrode active material layer, the particles have a short distance therebetween, and the area of adhesion with the negative electrode active material is increased, thereby realizing uniform and even adhesion force in the negative electrode active material layer.

**<Mathematical Formula Conditions>**

In addition, the negative electrode active material layer according to the present disclosure includes the first polymer particles having a particle diameter ($D_{50}$) equal to or more than 50 nm and less than 200 nm, the first polymer particles are distributed therein uniformly, and thus is characterized by satisfying at least one of the following conditions of A) to C). According to a more particular embodiment, the negative electrode active material layer satisfies all of the following conditions of A) to C).

$$A) \quad 100.000 \text{ gf/20 mm*MPa} < X_c \times X_a$$

$$B) \quad 0 \text{ MPa} < X_b < 0.280 \text{ MPa}$$

$$C) \quad 0 \text{ Mpa} < X_d - X_u < 0.200 \text{ Mpa}$$

According to an embodiment of the present disclosure, referring to the condition of A), the upper limit of $X_c \times X_a$ may be 1000.000 gf/20 mm*MPa, 800.000 gf/20 mm*MPa, 600.000 gf/20 mm*MPa, 500.000 gf/20 mm*MPa, or 300.000 gf/20 mm*MPa.

According to an embodiment of the present disclosure, referring to the condition of B), 0 MPa < $X_b$ < 0.250 MPa, 0 MPa < $X_b$ < 0.235 MPa, 0 MPa < $X_b$ < 0.210 MPa, or 0 MPa < $X_b$ < 0.200 MPa.

Meanwhile, according to an embodiment of the present disclosure, the negative electrode active material layer may satisfy at least one of the conditions of A) to C) and may secondarily satisfy the following condition of D). In a variant, the negative electrode active material layer may satisfy all of the conditions of A) to D).

$$D) \quad 0.500 \text{ nm}^{-1} < 100/X_t < 1.500 \text{ nm}^{-1},$$

wherein $X_t$ represents the particle diameter ($D_{50}$, unit: nm) of the binder particles.

In the conditions of A) to D), $X_u$ represents the shear force in a region corresponding to a thickness of 5-10% based on 100% of the total thickness of the negative electrode active material layer from the top to the bottom in the thickness direction of the negative electrode active material layer. According to an embodiment of the present disclosure, the shear force of $X_u$ may be obtained by preparing a plurality of electrode samples having a predetermined size, cutting the same point from each electrode, and taking the average value as a shear force value.

$X_d$ represents the shear force in a region corresponding to a thickness of 5-10% based on 100% of the total thickness of the negative electrode active material layer from the bottom to the top in the thickness direction of the negative electrode active material layer. According to an embodiment of the present disclosure, the shear force of $X_d$ may be obtained by preparing a plurality of electrode samples having a predetermined size, cutting the same point from each electrode, and taking the average value as a shear force value.

$X_a$ represents the average of shear forces at two or more arbitrary points based on the thickness of the negative electrode active material layer. According to an embodiment of the present disclosure, the shear force of $X_a$ may be the average of the values obtained from a plurality of electrode samples.

$X_b$ represents the deviation of shear force at two or more arbitrary points based on the thickness of the negative electrode active material layer. According to an embodiment of the present disclosure, the shear force of $X_b$ may be the average of the values obtained from a plurality of electrode samples.

$X_t$ refers to the size of the polymer particles contained in the electrode active material layer.

$X_c$ refers to adhesion force. The adhesion force means the force determined by attaching an electrode having a predetermined size to a substrate by using a double-sided tape, or the like, and measuring the force while peeling the electrode attached to the substrate at a rate of 180-220 mm/min. The adhesion force may be taken as the average value after repeating the measurement many times. Referring to this, the adhesion force ($X_c$) may be the peel strength measured at the point having the weakest adhesion force in the electrode. According to the present disclosure, the adhesion force in the thickness direction of the negative electrode active material layer is derived by setting a mathematic formula from the product of the shear stress value obtained through SAICAS analysis with the value of $X_c$ applied thereto.

The shear force is a value obtained by measuring the vertical force and horizontal force generated when press-fitting a blade to the surface of a sample while maintaining a predetermined angle and predetermined rate, and converting the force into shear stress. According to an embodiment of the present disclosure, the shear force may be determined by using SAICAS EN-EX (available from Daipla wintes).

According to an embodiment of the present disclosure, the shear force may be calculated according to the following Formula 1, while cutting an electrode active material layer with a micro-blade at a predetermined cutting rate by using SAICAS.

[Formula 1]

$$\tau_S = \frac{F_h \cos\varphi \sin\varphi - F_v \sin^2\varphi}{bt_o}$$

wherein $\tau_s$ represents shear strength depending on cutting depth, b represents the width of the micro-blade, $t_0$ represents cutting depth, $\varphi$ represents shear angle, each of $F_h$ and $F_v$ represents the measurement of each of horizontal force ($F_h$) and vertical force ($F_v$) applied to the micro-blade to maintain such a predetermined cutting rate.

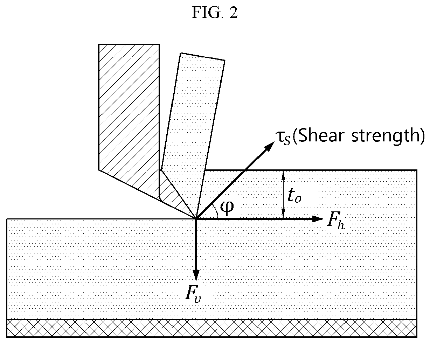

FIG. 2 is a schematic view illustrating an embodiment in which shear strength is determined depending on cutting depth, while cutting an active material layer with a micro-blade by using SAICAS (Surface and Interfacial Cutting Analysis System). As shown in FIG. 2, in measuring the shear strength of the active material layer depending on cutting depth, the micro-blade provided in the system of SAICAS is used to set a predetermined shear angle ($\varphi$) so that the active material layer may be cut at a predetermined cutting rate. While such cutting is performed, each of the horizontal force ($F_h$) and vertical force ($F_v$) applied to the micro-blade is measured in order to maintain such a predetermined cutting rate. In addition, shear strength ($\tau_s$) depending on cutting depth can be calculated according to the above Formula 1 from the measurement results.

Meanwhile, each of $X_u$ and $X_d$ may independently represent 2.000-4.000 MPa, such as a value ranging from 2.000 MPa to 3.500 MPa.

Meanwhile, the adhesion ($X_c$) may fall within a range of 15.000 gf/20 mm to 50.000 gf/20 mm.

Meanwhile, according to an embodiment of the present disclosure, when the values of $X_a$ and $X_b$ are calculated, the values of $X_u$ and $X_d$ are incorporated preferably. In other words, when cutting is carried out in order to calculate the values of $X_a$ and $X_b$, the cutting site may include the site subjected to cutting for calculating the values of $X_u$ and $X_d$.

In addition, the negative electrode active material layer according to the present disclosure shows a uniform distribution of negative electrode binder polymer based on the thickness direction by virtue of the above-described structural characteristics. According to a particular embodiment, the negative electrode active material layer may show a difference of 10 wt% or less between the content (wt%) of the binder based on 100 wt% of the upper portion and the content (wt%) of the binder based on 100 wt% of the lower portion, when the electrode active material is divided into the upper portion and the lower portion based on the point corresponding to 50% of the thickness of the electrode active material layer from the current collector. In addition, the negative electrode active material layer may show a difference of 10 wt% or less between the content (wt%) of the binder in a region from the current collector to 15% of the thickness of the negative electrode active material layer toward the negative electrode surface layer portion and the content (wt%) of the binder in a region from the negative electrode active material surface layer portion to 15% of the thickness of the negative electrode active material layer toward the current collector, based on the thickness of the negative electrode active material layer. Such a distribution of binder may result from the particle diameter range and the characteristics of the negative electrode active material layer as described above.

When shear force and adhesion force are insufficient, the adhesion between composite particles and the current collector and the adhesion among the composite particles are reduced, and the deviation in shear stress depending on depth from the surface in the thickness direction of the negative electrode active material layer may be increased. According to a particular embodiment of the present disclosure, when the deviation (standard deviation) is 0.200 MPa or more, it may be regarded that the binder distribution in the thickness direction of the negative electrode is not uniform, and in this case, the binding force and resistance may be degraded. In addition, as the difference $(X_d - X_u)$ between the surface of the negative electrode active material layer and the side facing the current collector increases, it may be regarded that binder migration occurs more highly. In addition, as the number of binder resin particles per unit area of the negative electrode active material is increased and the gradient in the thickness direction is decreased, the binder is distributed more uniformly in the electrode to provide improved adhesion in the negative electrode. When the gradient is small, binder migration less occurs, which suggests that the binder is distributed uniformly. Meanwhile, a large gradient in the thickness direction may suggest that there is a difference in proportion of binder content between the upper portion of the electrode and the lower portion of the electrode.

Meanwhile, the negative electrode according to the present disclosure may be obtained by forming the negative electrode active material layer through the compression of the composite particles. As described hereinafter, the negative electrode according to the present disclosure is characterized in that composite particles containing electrode ingredients are prepared, the composite particles are applied to a current collector, or the like, and then pressurization is carried out so that the composite particles may be integrated into a layered structure. In the case of a wet process for manufacturing an electrode, including preparing a slurry by introducing electrode ingredients to a solvent, binder migration is induced by the evaporation of the solvent during the drying of the slurry, and thus the binder is distributed intensively on the surface portion of the electrode. However, according to the present disclosure, the method for compressing composite particles in a dry state to integrate them into a layered structure is applied, while not using any solvent, and thus no binder migration occurs. Therefore, the binder shows a uniform distribution in the thickness direction of the negative electrode active material layer.

Particular examples of the negative electrode active material include: carbon such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers, such as polyacetylene; Li-Co-Ni type materials; or the like. However, the scope of the present disclosure is not limited thereto.

The negative electrode conductive material is not particularly limited, as long as it has conductivity while not causing any chemical change in the corresponding battery. Particular examples of the negative electrode conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material such as a polyphenylene derivative; or the like. Particularly, the conductive material may include at least one selected from the group consisting of activated carbon, graphite, carbon black and carbon nanotubes, and more particularly, activated carbon, with a view to homogeneous mixing of the conductive material and improvement of conductivity.

According to the present disclosure, the negative electrode binder polymer is not particularly limited, as long as it is one used as a binder material for an electrochemical device. For example, the negative electrode binder polymer may include a diene-based polymer, an acrylate-based polymer, a fluorine-based polymer, a styrene-based polymer, or two or more of them.

Particular examples of the diene-based polymer include a polymer containing a conjugated diene-derived monomer unit, such as butadiene or isoprene, and hydrogenated products thereof. The ratio of the conjugated diene-derived monomer unit in the diene-based polymer may be generally 40 wt% or more, preferably 50 wt% or more, and more preferably 60 wt% or more.

Particularly, the diene-based polymer may include: a conjugated diene homopolymer, such a polybutadiene or polyisoprene; aromatic vinyl-conjugated diene copolymer, such as styrene-butadiene copolymer (SBR), optionally modified with carboxyl; vinyl cyanide-conjugated diene copolymer, such as acrylonitrile-butadiene copolymer (NBR); hydrogenated SBR, hydrogenated NBR, or the like.

The styrene-based polymer is a polymer having a styrene monomer-derived repeating unit and may include styrene homopolymer (polystyrene), styrene copolymer, or the like. Particular examples of the styrene copolymer include styrene-ethylene-butadiene copolymer, styrene-butadiene-propylene copolymer, styrene-isoprene copolymer, styrene-acrylic acid-n-butyl itaconic acid-methyl methacrylate-acrylonitrile copolymer, block copolymer, such as styrene-butadiene block copolymer, styrene-butadiene-styrene block copolymer, styrene-ethylene-butylene-styrene block copolymer, styrene-isoprene block copolymer, or styrene-ethylene-propylene-styrene block copolymer, or the like.

Particular examples of the acrylate-based polymer include polymers containing an acrylate- and/or methacrylate-derived monomer unit. The ratio of the acrylate- and/or methacrylate-derived monomer unit in the acrylate-based polymer may be generally 40 wt% or more, preferably 50 wt% or more, more preferably 60 wt% or more. Particular examples of the acrylate-based polymer include: a crosslinked acrylate-based polymer, such as 2-ethylhexyl acrylate-methacrylic acid-acrylonitrile-ethylene glycol dimethacrylate copolymer, 2-ethylhexyl acrylate-methacrylic acid-methacrylonitrile-diethylene glycol dimethacrylate copolymer, 2-ethylhexyl acrylate-styrene-methacrylic acid-ethylene glycol dimethacrylate copolymer, butyl acrylate-acrylonitrile-diethylene glycol dimethacrylate copolymer, butyl acrylate-acrylic acid-trimethyolpropane trimethacrylate, or the like; copolymer of ethylene with (meth)acrylate, such as ethylene-methyl acrylate copolymer, ethylene-methyl methacrylate copolymer, ethylene-ethyl acrylate copolymer, ethylene-ethyl methacrylate copolymer, or the like; graft polymer containing the copolymer of ethylene with (meth)acrylate, grafted with a radical polymerizable monomer; or the like. Meanwhile, particular examples of the radical polymerizable monomer used in the graft polymer include methyl methacrylate, acrylonitrile, methacrylic acid, or the like. In addition, a copolymer of ethylene with (meth)acrylic acid, such as ethylene-acrylic acid copolymer, ethylene-methacrylic acid copolymer, or the like, may be used as a dispersion type binder.

The fluorine-based polymer may include a polyvinylidene-based copolymer, such as polyvinylidene fluoride (PVDF), polytetrafluoroethylene (PTFE) or PVDF-HFP, particularly polytetrafluoroethylene (PTFE), and more particularly, the fluorinated polymer may be polytetrafluoroethylene (PTFE).

According to an embodiment of the present disclosure, the negative electrode binder polymer may preferably include at least one of a diene-based polymer and styrene-based polymer in an amount of 60 wt% or more based on the total weight of the negative electrode binder polymer. According to a particular embodiment, the negative electrode may include styrene-butadiene block copolymer in an amount of 60 wt% or more based on the total binder weight. Meanwhile, the negative electrode binder polymer may further include a fluorine-based copolymer, polyolefin-based copolymer, polyethylene oxide (PEO), acrylate-based copolymer, or the like.

According to an embodiment of the present disclosure, the negative electrode binder polymer preferably has a particle-like shape, since the particle-like binder polymer shows high binding property and can inhibit deterioration of the resultant electrode caused by degradation of the electrostatic capacity or repetition of charge/discharge. For example, the particle-like binder includes a binder containing dispersible binder particles dispersed in water, as in the case of latex, or a powdery binder obtained by drying the dispersion.

Meanwhile, a filler as an ingredient for inhibiting swelling of the negative electrode active material layer may be further introduced optionally to the negative electrode active material layer. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

The current collector is not particularly limited, as long as it has high conductivity, while not causing any chemical change in the corresponding battery. Particular examples of the current collector include stainless steel, aluminum, nickel, titanium, baked carbon, copper or stainless steel surface-treated with carbon, nickel, titanium, silver, or the like. In addition, fine surface irregularities may be formed on the surface of the current collector to enhance the adhesion force of the electrode active material. The current collector may be used in various shapes, including a film, sheet, foil, net, porous body, foamed body, non-woven web, or the like.

Meanwhile, according to an embodiment of the present disclosure, a conductive primer may be totally or partially coated on the surface of current collector where the negative electrode active material layer is formed.

The primer layer may include a primer layer binder polymer (second polymer) and a primer layer conductive material (second conductive material), and the sum of the content of the second binder and the content of the second conductive material may be 90 wt% or more, or 95 wt% or more, based on 100 wt% of the primer layer. When the primer layer is interposed between the current collector and the negative electrode active material layer, it is possible to ensure high adhesion force between the current collector and the negative electrode active material layer and to obtain an electrochemical effect, such as improvement of the life characteristics of a battery.

According to an embodiment of the present disclosure, the primer layer binder polymer may include an ingredient capable of ensuring the stability of the primer layer with time. According to another embodiment of the present disclosure, particular examples of the primer layer binder polymer include styrene butadiene rubber (SBR), butadiene rubber (BR), nitrile butadiene rubber (NBR), styrene butadiene styrene block copolymer (SBS), styrene ethylene butadiene block copolymer (SEB), styrene-(styrene butadiene)-styrene block copolymer, natural rubber (NR), isoprene rubber (IR), ethylene-propylene-diene terpolymer (EPDM), poly(ethylene-co-propylene-co-5-methylene-2-norbornene), polytetrafluoro ethylene (PTFE), polyvinylidene fluoride, polyvinyl chloride, polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene, polypropylene, polyethylene-co-vinyl acetate, polyethylene oxide, polypropylene oxide, polyarylate, cyanoethyl pullulan, cyanoethyl polyvinyl alcohol, or two or more of them. More particularly, the binder may include styrene butadiene rubber (SBR), nitrile butadiene rubber (NBR), polymethyl methacrylate, polyethylhexyl acrylate, polybutyl acrylate, or two or more of them.

Meanwhile, the second conductive material is not particularly limited, as long as it has conductivity while not causing any chemical change in the corresponding battery. Particular examples of the conductive material include: graphite, such as natural graphite or artificial graphite; carbon black-based carbonaceous compound, such as carbon black, acetylene black, ketjen black, channel black, furnace black, lamp black or thermal black; conductive fibers, such as carbon fibers or metal fibers; fluorocarbon; metal powder, such as aluminum or nickel powder; conductive whisker, such as zinc oxide or potassium titanate; conductive metal oxide, such as titanium dioxide; conductive material such as a polyphenylene derivative; or the like. Particularly, the conductive material may include activated carbon, graphite, carbon black, carbon nanotubes or a mixture of two or more of them, and more particularly, activated carbon, with a view to homogeneous mixing of the conductive material and improvement of conductivity.

Hereinafter, the method for preparing the composite particles according to the present disclosure will be explained in more detail. According to an embodiment of the present disclosure, the composite particles may be prepared by the method including the steps of: mixing a negative electrode active material and a first binder with a dispersion medium to prepare a slurry; and spray drying the slurry.

First, the negative electrode active material and the first binder are introduced to and dispersed in a solvent to prepare a slurry for preparing composite particles. Herein, if necessary, a first conductive material or other additives may be optionally further introduced thereto.

The dispersion medium used to obtain the slurry may be water, most suitably, but an organic solvent may also be used. Particular examples of the organic solvent include: an alkyl alcohol, such as methyl alcohol, ethyl alcohol or propyl alcohol; alkyl ketone, such as acetone or methyl ethyl ketone; ether, such as tetrahydrofuran, dioxane or diglyme; amide, such as diethylformamide, dimethylacetoamide, N-methyl-2-pyrrolidone (also referred to as NMP hereinafter) or dimethyl imidazolidinone; sulfur-based solvent, such as dimethyl sulfoxide or sulfurane; or the like. However, the organic solvent is an alcohol, preferably. When an organic solvent having a lower boiling point as compared to water is used in combination, it is possible to increase the drying rate during fluidization granulation. In addition, since the dispersibility or solubility of the negative electrode binder may be changed, the viscosity or flowability of the slurry may be controlled depending on the amount or type of the dispersion medium to improve the production efficiency.

The amount of the dispersion medium used when preparing the slurry may be generally such an amount that the solid content of the slurry may be 1-50 wt%, 5-50 wt% or 10-30 wt%.

The method or order of dispersing or dissolving the negative electrode ingredients such as the negative electrode active material and the first polymer in the dispersion medium is not particularly limited. For example, such methods may include a method of adding the negative electrode active material and the first polymer to the dispersion medium and mixing them, a method of dissolving or dispersing the first polymer in the dispersion medium, adding the negative electrode active material thereto and mixing them, or the like. When the slurry includes a conductive material and/or an additive, such ingredients may be introduced during the introduction of the negative electrode active material. Particular examples of the mixing means may include a mixing system, such as a ball mill, sand mill, bead mill, pigment dispersion system, stone mill, ultrasonic dispersion system, homogenizer, planetary mixer, or the like. For example, the mixing may be carried out at a temperature ranging from room temperature to 80°C for 10 minutes to several hours.

Next, the slurry is spray dried. The spray drying method includes spraying and drying the slurry in hot air. Typical examples of the spraying system used for spray drying include atomizers. The atomizers are classified into the two types of rotary disc process and pressurization process atomizers. The rotary disc process includes introducing the slurry substantially to the center of a disc rotating at a high speed, allowing the slurry to be located outside of the disc by the centrifugal force of the disc, and drying the slurry in a fog-like phase. The disc rotation speed depends on the size of the disc, but generally may be 5,000-35,000 rpm, preferably 15,000-30,000 rpm. Meanwhile, the pressurization process includes pressurizing the slurry and allowing the slurry to pass through a thin nozzle to dry the slurry in a fog-like phase.

The temperature of the sprayed slurry may be generally room temperature, but the slurry may be warmed to a temperature higher than room temperature. The hot air temperature during spraying may be 80-250°C, preferably 100-200°C. In the spray drying method, a hot air suction method is not particularly limited. For example, the hot air suction method may include a method using hot air flowing in parallel with the direction of spraying in the horizontal direction, a method of spraying a slurry near the top of a drying tower and allowing the sprayed slurry to drop together with hot air, a method of allowing the sprayed drops to be in contact with hot air in a counter-current mode, a method of allowing the sprayed drops to flow in parallel with initial hot air first, and then to drop by gravity so that they may be contact with hot air in a counter-current mode, or the like.

In addition, the product obtained from the spray drying may be optionally heat treated, wherein the heat treatment temperature may be generally 80-300°C.

Once the composite particles are obtained as described above, they may be used to manufacture a negative electrode. Hereinafter, the method for manufacturing a negative electrode according to an embodiment of the present disclosure will be explained in detail.

According to an embodiment of the present disclosure, the negative electrode may be obtained by the method including the steps of: applying a plurality of composite particles onto a current collector; and pressurizing the applied composite particles to form a negative electrode active material layer.

First, the composite particles prepared by the method as described above are applied onto a current collector. Herein, as described above, the primer layer containing the second conductive material and the second binder may be provided totally or partially on at least one surface of the current collector.

According to an embodiment of the present disclosure, the composite particles prepared as described above may be supplied to a roll-type pressurization molding system through a supply device, such as a screw feeder, to form a negative electrode active material layer, wherein the current collector may be provided to the roll of the pressurization molding system, while supplying the composite particles at the same time so that the negative electrode active material layer may be laminated directly on the current collector. In a variant, the composite particles may be applied onto the current collector and adjusted to a uniform thickness by using a blade, or the like, and then molded through a pressurization system to form the negative electrode active material layer.

In the above-mentioned methods, the temperature during the roll pressurization molding is generally 0-200°C and is preferably higher than the melting point or glass transition temperature of the first binder, and more preferably, may be at least 20°C higher than the melting point or glass transition temperature of the first binder. The molding rate in the roll pressurization molding may be generally 0.1-20 m/min., or 1-10 m/min. In addition, the press linear pressure between rolls may be 0.2-30 kN/cm, or 0.5-10 kN/cm.

In order to eliminate a deviation in thickness of the molded negative electrode and to increase the density of the negative electrode active material layer so that the negative electrode may be provided with a high capacity, pressurization may be further carried out (post-pressurization), if necessary. The post-pressurization is generally carried out by a roll pressing process. In the roll pressing process, two cylindrical rolls are allowed to stand longitudinally in parallel with each other at a small interval, and to rotate in the opposite direction to pressurize the electrode inserted between the rolls. The roll may be controlled in temperature, and for example, may be heated or cooled.

In another aspect of the present disclosure, there are provided a secondary battery which includes an electrode assembly including a positive electrode, a negative electrode and a separator, wherein the electrode assembly is received in a battery casing (e.g. a cylindrical casing, prismatic casing, pouch, or the like) together with a lithium-containing nonaqueous electrolyte, and an energy storage system including the secondary battery as a unit cell. Herein, the negative electrode is the same as disclosed herein.

The positive electrode may include a current collector and a positive electrode active material layer formed on at least one surface of the current collector. The positive electrode active material layer may include a positive electrode active material, a third conductive material and a third polymer for a positive electrode binder. The positive electrode active material is not particularly limited, as long as it includes a lithium transition metal oxide, a lithium metal iron phosphorus oxide or a metal oxide. Particular examples of the positive electrode active material include at least one selected from: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $Li_{1+x}(Ni_aCo_bMn_cAl_d)_{1-x}O_2$ (x is 0-0.03, a is 0.3-0.95, b is 0.01-0.35, c is **0.01-0.5,** d is 0.001-0.03, a + b + c + d = 1) in which Li is partially substituted with an aluminum ion; lithium metal phosphorous oxides $LiMPO_4$ (wherein M is Fe, Co, Ni or Mn); disulfide compounds; $Fe_2(MoO_4)_3$; or the like. However, the scope of the present disclosure is not limited thereto.

Meanwhile, the third conductive material and the third polymer are not particularly limited, as long as they may be used conventionally for a positive electrode, and suitable ingredients may be selected by those skilled in the art. For example, the third conductive material may be selected as an ingredient suitable for a positive electrode referring to the first or the second conductive material. In addition, the third polymer may be selected as an ingredient suitable for a positive electrode referring to the first or the second polymer.

Particular examples of the separator may include a porous polymer film used conventionally as a separator, such as a porous polymer film made of a polyolefin-based polymer, including ethylene homopolymer, propylene homopolymer, ethylene/butene copolymer, ethylene/hexene copolymer or ethylene/methacrylate copolymer, or a laminate thereof. In addition, an insulating thin film having high ion permeability and mechanical strength may be used. The separator may include a safety reinforced separator (SRS), the surface of which is coated with a thin layer of ceramic material. Further, a conventional porous non-woven web, such as a non-woven web made of high-melting point glass fibers, polyethylene terephthalate fibers, or the like, may be used. However, the scope of the present disclosure is not limited thereto.

The electrolyte includes a lithium salt as an electrolyte salt and an organic solvent for dissolving the lithium salt.

Any lithium salt used conventionally for an electrolyte for a secondary battery may be used with no particular limitation. For example, the anion of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The organic solvent contained in the electrolyte may be any organic solvent used conventionally without particular limitation. Typical examples of the organic solvent include at least one selected from the group consisting of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfurane, gamma-butyrolactone, propylene sulfite, and tetrahydrofuran.

Particularly, among the carbonate-based organic solvents, ethylene carbonate and propylene carbonate, which are cyclic carbonates, are organic solvents having high viscosity and a high dielectric constant, and thus may be used preferably, since they can dissociate the lithium salt in the electrolyte with ease. When such a cyclic carbonate is used after mixing it with a linear carbonate having low viscosity and a low dielectric constant, such as dimethyl carbonate or diethyl carbonate, it is possible to prepare an electrolyte having higher electrical conductivity, more preferably.

Optionally, the electrolyte used according to the present disclosure may further include additives contained in the conventional electrolyte, such as an overcharge-preventing agent, or the like.

The lithium secondary battery according to an embodiment of the present disclosure may be obtained by interposing the separator between the positive electrode and the negative electrode to form an electrode assembly, introducing the electrode assembly to a pouch, a cylindrical battery casing or a prismatic battery casing, and then injecting the electrolyte thereto to finish a secondary battery. In a variant, the lithium secondary battery may be obtained by stacking the electrode assemblies, impregnating the stack with the electrolyte, and introducing the resultant product to a battery casing, followed by sealing.

Herein, since the structures of the secondary battery and the energy storage system are well known to those skilled in the art, description thereof will be omitted in the present disclosure.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Examples**

**Example 1**

(1) Preparation of Current Collector Provided with Primer Layer

First, 30 parts by weight of carbon black (specific surface area: 30 $m^2/g$, particle size: 70 nm) as a primer layer conductive material, 69 parts by weight of styrene-butadiene rubber (SBR) (Tg: -15°C) as a second binder, and 1 part by weight of carboxymethyl cellulose (CMC) as a dispersant were mixed in water as a dispersion medium to prepare a slurry for a primer layer. Herein, the weight ratio of the conductive material, the binder and the dispersant in the slurry was the same as the weight ratio of the conductive material, the binder and the dispersant in the primer layer to be formed subsequentially. The slurry for a primer layer had a solid content of 7 wt%.

The prepared slurry for a primer layer was applied to one surface of a copper current collector (thickness: 10 $\mu$m) and dried at 130°C to form a primer layer on the whole surface of the copper current collector.

**(2) Preparation of Composite Particles**

First, 1.91 parts by weight of natural graphite having a sphericity of 0.95 and 76.5 parts by weight of artificial graphite having an average sphericity of 0.9 as a negative electrode active material, carbon black (Super C65) as a negative electrode conductive material, modified styrene butadiene copolymer ($D_{50}$ 130 nm) as a first polymer and aqueous solution of carboxylmethyl cellulose (daicel 2200, solid content 1.5 wt%) as a dispersant were mixed with water as a dispersion medium at a weight ratio of 95.6:1.0:2.3:1.1 through a homogenizer to prepare a slurry having a viscosity of about 3000-5000 cPs. Herein, the slurry had a solid content of 53 wt% and was controlled to a solid content of 20 wt% by adding water thereto. Then, the viscosity was 1000 cps or less.

Then, composite particles were prepared from the slurry by using a spray dryer. Herein, the spray dryer was controlled to the conditions of an inlet temperature of 180°C and an outlet temperature of 100°C, and the process was carried out for 3 hours while controlling the rotation speed to 20,000 rpm. The resultant composite particles were sieved by using an industrial sieve to remove a macropowder having a size of 150 $\mu$m or more. The resultant composite particles had an average particle diameter ($D_{50}$) of 78 $\mu$m.

**(3) Manufacture of Negative Electrode**

The composite particles prepared as described above were applied uniformly to one surface of the current collector having the primer layer by using a thickness-controlling bar to a level of 380 mg per 25 cm² of the current collector. Then, a sheeting machine, a roll-to-roll hot press molding system, was used to carry out pressurization under the conditions of a pressure of 0.7 ton/cm and 60°C at a rate of 2 m/min to form a negative electrode active material layer, thereby providing a negative electrode.

**Example 2**

A negative electrode was obtained in the same manner as Example 1, except that the first polymer had a $D_{50}$ of 90 nm.

**Comparative Example 1**

First, 1.91 parts by weight of natural graphite having a sphericity of 0.95 and 76.5 parts by weight of artificial graphite having an average sphericity of 0.9 as a negative electrode active material, carbon black (Super C65) as a negative electrode conductive material, modified styrene butadiene copolymer ($D_{50}$ 130 nm) as a first polymer and aqueous solution of carboxylmethyl cellulose (daicel 2200, solid content 1.5 wt%) as a dispersant were mixed with water as a dispersion medium at a weight ratio of 95.6:1.0:2.3:1.1 through a homogenizer to prepare a slurry having a viscosity of about 3000-5000 cPs. Herein, the slurry had a solid content of 53 wt%. Then, the slurry was coated on a copper (Cu) foil (thickness 10 $\mu$m) as a negative electrode current collector by using a coater. The coating rate was set to 0.3 m/sec, and drying was carried out at a temperature of 120°C by using a drying system provided with a how air blower and IR heater. Then, the resultant product was pressed through a roll pressing process to obtain a negative electrode provided with a negative electrode active material layer having a loading amount per unit area of 380 mg/25 cm² after drying.

**Comparative Example 2**

A negative electrode was obtained in the same manner as Comparative Example 1, except that the first polymer had a $D_{50}$ of 90 nm.

**Comparative Example 3**

A negative electrode was obtained in the same manner as Comparative Example 1, except that the first polymer had a $D_{50}$ of 250 nm.

**Comparative Example 4**

A negative electrode was obtained in the same manner as Example 1, except that the first polymer had a $D_{50}$ of 250 nm.

**SAICAS Analysis Method**

To determine the shear force upon cutting at each point in the thickness of a negative electrode active material layer, SAICAS (Surface and Interfacial Cutting Analysis System) was used. As the analysis system, SAICAS-DN (Daipla Winters, Japan) was used. A blade made of boron nitride (blade width: 1 mm, rake angle: 20°, clearance angle: 10°) was set to be moved at a horizontal speed of 2 $\mu$m/sec and a vertical sped of 0.2 $\mu$m/sec. The mechanical properties of the constitutional ingredients in the negative electrode were determined every 10 $\mu$m depth in the electrode. The vertical force and horizontal force occurring during the press-fitting of the blade were measured, and the measurements of the vertical force and the horizontal force were converted into shear force.

**Method for Determining Adhesion Force**

A double-sided tape having a size of 4 cm x 2 cm was attached to slide glass, cut into a size of 20 mm x 12 cm, and constant force was applied by using a roller of 2 kg to attach the negative electrode to the double-sided tape. The slide glass having the negative electrode attached thereto was laid at an angle of 180°, the negative electrode was peeled at a rate of 200 mm/min, and the force was measured. The test procedure was repeated five times. The results are shown in the following Table 1 and Table 2 as average values.

[Table 1]

| Location from the negative electrode active material surface in downward direction (depth, $\mu$m) | Ex. 1 (MPa) | Ex. 2 (MPa) | Comp. Ex. 1 (MPa) | Comp. Ex. 2 (MPa) | Comp. Ex. 3 (MPa) | Comp. Ex. 4 (MPa) |
|---|---|---|---|---|---|---|
| First point (10 $\mu$m, $X_u$) | 3.430 | 3.570 | 3.120 | 3.250 | 3.350 | 3.430 |
| Second point (20 $\mu$m) | 3.120 | 3.158 | 2.312 | 2.530 | 2.750 | 2.640 |
| Third point (30 $\mu$m) | 2.850 | 3.200 | 2.740 | 2.850 | 2.980 | 2.640 |
| Fourth point (40 $\mu$m) | 3.056 | 3.330 | 2.564 | 2.950 | 2.360 | 3.540 |
| Fifth point (50 $\mu$m) | 3.220 | 3.178 | 2.897 | 2.453 | 2.550 | 2.898 |
| Sixth point (60 $\mu$m) | 2.886 | 3.456 | 3.220 | 3.012 | 3.250 | 3.235 |
| Seventh point (70 $\mu$m) | 3.456 | 3.386 | 3.220 | 2.880 | 2.530 | 3.029 |
| Eighth point (80 $\mu$m, $X_d$) | 3.260 | 3.380 | 2.486 | 2.140 | 2.848 | 3.215 |
| $X_a$ (average) (average value of first to eighth points) | 3.160 | 3.332 | 2.818 | 2.758 | 0.315 | 3.078 |
| $X_b$ (standard deviation) (standard deviation of first to eighth points) | 0.199 | 0.129 | 0.311 | 0.315 | 0.315 | 0.298 |
| Total thickness of negative electrode active material in each of Examples and Comparative Examples : 100 $\mu$m | | | | | | |

[Table 2]

| | Particle diameter of first binder polymer $D_{50}$ (nm) | 100/Xt (nm$^{-1}$) | Adhesion force (gf/20mm) ($X_c$) | Average of shear forces at different regions ($X_a$) (MPa) | Standard deviation ($X_b$) (MPa) | $X_d$-$X_u$ (MPa) | $X_c \times X_a$ (gf/20 mm* MPa) |
|---|---|---|---|---|---|---|---|
| Ex. 1 | 130 | 0.770 | 37.900 | 3.160 | 0.199 | 0.170 | 119.764 |
| Ex. 2 | 90 | 1.110 | 38.600 | 3.332 | 0.129 | 0.190 | 128.615 |
| Comp. Ex. 1 | 130 | 0.770 | 23.450 | 2.818 | 0.311 | 0.652 | 66.082 |
| Comp. Ex. 2 | 90 | 1.110 | 22.425 | 2.758 | 0.315 | 1.110 | 61.848 |
| Comp. Ex. 3 | 250 | 0.400 | 30.100 | 2.848 | 0.315 | 0.820 | 85.725 |
| Comp. Ex. 4 | 250 | 0.400 | 32.200 | 3.078 | 0.298 | 0.215 | 99.112 |

As can be seen from the above results, in the case of Comparative Examples 3 and 4 using the first binder polymer having an excessively large particle diameter, the adhesion is degraded as compared to Examples. Meanwhile, in the case of Comparative Examples 1 and 2, the first binder polymer has a particle diameter similar to the particle diameter of Examples 1 and 2. However, Comparative Examples 1 and 2 shows a larger standard deviation, and thus it can be seen that the adhesion is degraded.

**Claims**

1.   A negative electrode, comprising a current collector and a negative electrode active material layer formed on at least one surface of the current collector,

wherein the negative electrode active material layer comprises composite particles for a negative electrode, the composite particles for a negative electrode comprise a negative electrode active material and a negative electrode binder polymer, and the negative electrode binder polymer comprises an adhesive rubber-based polymer,
the negative electrode binder polymer has a shape of particles having a particle diameter $D_{50}$ of equal to or larger than 50 nm and smaller than 300 nm, and
the negative electrode active material layer satisfies at least one of the following conditions of A) to C):

$$A) \qquad 100.000 \text{ gf/20 mm*MPa} < X_c \times X_a$$

$$B) \qquad 0 \text{ MPa} < X_b < 0.280 \text{ MPa}$$

$$C) \qquad 0 \text{ Mpa} < X_d - X_u < 0.200 \text{ Mpa},$$

wherein $X_u$ represents the shear force in a region corresponding to a thickness of 5-10% based on 100% of the total thickness of the negative electrode active material layer from the top to the bottom in the thickness direction of the negative electrode active material layer, $X_d$ represents the shear force in a region corresponding to a thickness of 5-10% based on 100% of the total thickness of the negative electrode active material layer from the bottom to the top in the thickness direction of the negative electrode active material layer, $X_a$ represents the average of shear forces at two or more arbitrary points based on the thickness of the negative electrode active material layer, $X_b$ represents the deviation of shear force at two or more arbitrary points based on the thickness of the negative electrode active material layer, and $X_c$ represents adhesion force.

2. The negative electrode according to claim 1, wherein the negative electrode active material layer satisfies all of the conditions of A) to C).

3. The negative electrode according to claim 1 or 2, wherein the negative electrode active material layer further satisfies the following condition of D):

$$D) \quad 0.500 \text{ nm}^{-1} < 100/X_t < 1.500 \text{ nm}^{-1},$$

wherein $X_t$ represents the particle diameter $D_{50}$ of the binder particles in a unit of nm.

4. The negative electrode according to claim 1, wherein the composite particles for a negative electrode comprise the negative electrode active material and the negative electrode binder polymer at a weight ratio of 90:10-99.9:0.1.

5. The negative electrode according to claim 1, wherein each of $X_u$ and $X_d$ independently represents 2.000-4.000 MPa.

6. The negative electrode according to claim 1, wherein $X_c$ is 15.000-50.000 gf/20 mm.

7. The negative electrode according to claim 1, wherein the value of each of $X_u$ and $X_d$ is independently reflected to each of $X_a$ and $X_b$.

8. The negative electrode according to claim 1, wherein the negative electrode active material comprises at least one selected from: a carbonaceous material including at least one selected from graphitizable carbon, non-graphitizable carbon, natural graphite and artificial graphite; $Li_xFe_2O_3$ ($0 \le x \le 1$), $Li_xWO_2$ ($0 \le x \le 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \le 1$; $1 \le y \le 3$; $1 \le z \le 8$); lithium metal; lithium alloy; silicon-based alloy; tin-based alloy; silicon oxide including at least one of SiO, SiO/C and $SiO_2$; and metal oxide including at least one of SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$.

9. The negative electrode according to claim 1, wherein the composite particles for a negative electrode have a particle diameter $D_{50}$ of 40-70 $\mu$m.

10. The negative electrode according to claim 1, wherein the negative electrode binder polymer comprises a diene-based polymer, an acrylate-based polymer, a fluorine-based polymer, a styrene-based polymer, or two or more of them.

11. The negative electrode according to claim 1, wherein the composite particles for a negative electrode have an aspect ratio of 0.5-1.0.

12. The negative electrode according to claim 1, wherein the composite particles for a negative electrode further comprise a negative electrode conductive material, and the negative electrode conductive material is used in an amount of 10 wt% or less based on 100 wt% of the composite particles for a negative electrode.

13. The negative electrode according to claim 1, wherein the current collector comprises a primer layer interposed between the current collector and the negative electrode active material layer, and the primer layer comprises a primer layer conductive material and a primer layer binder polymer.

14. The negative electrode according to claim 1, wherein the negative electrode active material layer is formed by compressing a plurality of composite particles for a negative electrode.

15. An electrochemical device comprising the negative electrode as defined in claim 1, a positive electrode and a separator interposed between the negative electrode and the positive electrode.

FIG. 1

FIG. 2

## INTERNATIONAL SEARCH REPORT

| International application No. |
|---|
| **PCT/KR2023/021512** |

| A. | CLASSIFICATION OF SUBJECT MATTER |
|---|---|

**H01M 4/13**(2010.01)i; **H01M 4/36**(2006.01)i; **H01M 4/62**(2006.01)i; **H01M 4/583**(2010.01)i; **H01M 4/04**(2006.01)i; **H01M 4/66**(2006.01)i; **H01M 4/139**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); H01G 9/00(2006.01); H01G 9/058(2006.01); H01M 4/04(2006.01); H01M 4/36(2006.01); H01M 4/525(2010.01); H01M 4/583(2010.01); H01M 4/62(2006.01); H01M 4/70(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학소자(electrochemical device), 음극(anode), 활물질(active material), 복합입자(composite particle), 바인더(binder), 입경(diameter, D50), 전단력(shear force), 접착력(adhesive strength)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2008-251965 A (NIPPON ZEON CO., LTD.) 16 October 2008 (2008-10-16)<br>See claims 1 and 6-8; and paragraphs [0023]-[0026], [0042], [0059], [0067], [0070] and [0077]. | 1-12,14-15 |
| Y | | 13 |
| Y | CN 112750978 A (ZHUHAI COSMX BATTERY CO., LTD.) 04 May 2021 (2021-05-04)<br>See claims 1-2 and 9; and paragraphs [0002] and [0024]. | 13 |
| A | JP 4752376 B2 (MATSUSHITA ELECTRIC INDUSTRIAL CO., LTD.) 17 August 2011 (2011-08-17)<br>See entire document. | 1-15 |
| A | JP 2005-276609 A (TDK CORP.) 06 October 2005 (2005-10-06)<br>See entire document. | 1-15 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/021512** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-1320381 B1 (LG CHEM, LTD.) 23 October 2013 (2013-10-23)<br>See entire document. | 1-15 |

Form PCT/ISA/210 (second sheet) (July 2022)

# EP 4 641 652 A1

<table>
<tr><th colspan="2">INTERNATIONAL SEARCH REPORT<br>Information on patent family members</th><th>International application No.<br><br>PCT/KR2023/021512</th></tr>
</table>

| Patent document cited in search report | | | Publication date (day/month/year) | Patent family member(s) | | | Publication date (day/month/year) |
|---|---|---|---|---|---|---|---|
| JP | 2008-251965 | A | 16 October 2008 | JP | 5201313 | B2 | 05 June 2013 |
| CN | 112750978 | A | 04 May 2021 | CN | 112750978 | B | 15 March 2022 |
| | | | | CN | 116897440 | A | 17 October 2023 |
| | | | | EP | 4145562 | A1 | 08 March 2023 |
| | | | | JP | 2023-528447 | A | 04 July 2023 |
| | | | | US | 2023-0115059 | A1 | 13 April 2023 |
| | | | | WO | 2022-143210 | A1 | 07 July 2022 |
| JP | 4752376 | B2 | 17 August 2011 | JP | 2007-035472 | A | 08 February 2007 |
| JP | 2005-276609 | A | 06 October 2005 | CN | 100674321 | A | 28 September 2005 |
| | | | | JP | 4552475 | B2 | 29 September 2010 |
| | | | | US | 2005-0285080 | A1 | 29 December 2005 |
| KR | 10-1320381 | B1 | 23 October 2013 | CN | 104081568 | A | 01 October 2014 |
| | | | | CN | 104081568 | B | 08 March 2017 |
| | | | | EP | 2797146 | A1 | 29 October 2014 |
| | | | | EP | 2797146 | A4 | 17 December 2014 |
| | | | | EP | 2797146 | B1 | 30 September 2015 |
| | | | | KR | 10-2013-0094738 | A | 26 August 2013 |
| | | | | US | 2015-0030923 | A1 | 29 January 2015 |
| | | | | US | 9711794 | B2 | 18 July 2017 |
| | | | | WO | 2013-122352 | A1 | 22 August 2013 |

Form PCT/ISA/210 (patent family annex) (July 2022)

**EP 4 641 652 A1**

**Patent documents cited in the description**

- KR 1020220182359